# FASCICULE DE BREVET EUROPEEN

(11) **EP 1 213 271 B1**
(45) Date de publication et mention de la délivrance du brevet: **16.06.2004**
(21) Numéro de dépôt: 01106850.9
(22) Date de dépôt: 19.03.2001
(51) Int. Cl.: C04B 28/02, B63B 3/24, C09D 1/08, C09D 7/12

(54) **Ragréage naval auto-nivelant, à très faible densité et applicable à très faible épaisseur**
Selbstnivellierende marine Dünnbettschicht mit geringer Densität
Self-levelling naval thin coating having low density

(30) Priorité: 06.12.2000 IT GE000137
(43) Date de publication de la demande: 12.06.2002
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- DE-A- 19 911 307
- FR-A- 2 502 632
- US-A- 5 935 699
- DATABASE WPI Section Ch, Week 199424 Derwent Publications Ltd., London, GB; Class L02, AN 1994-197853 XP002178181 -& SE 502 463 C (NOBEL PAINT & ADHESIVES AB), 23 octobre 1995 (1995-10-23)
- DATABASE WPI Section Ch, Week 199410 Derwent Publications Ltd., London, GB; Class A14, AN 1994-079821 XP002178182 & JP 06 032276 A (MIZUTANI A), 8 février 1994 (1994-02-08)
- CHEMICAL ABSTRACTS, vol. 102, no. 22, 3 juin 1985 (1985-06-03) Columbus, Ohio, US; abstract no. 189919v, "Mortar compositions" XP000125118 & JP 59 232950 A (KIKUSUI KAGAKU KOGYO CO.,LTD) 27 décembre 1984 (1984-12-27)

## Description

La présente invention concerne un ragréage naval auto-nivelant, constitué par un seul composant, applicable à épaisseur zéro, à très faible densité.

Comme on le sait, les ponts des navires - contrairement aux situations sur terre - présentent un manque de planéité, étant donné que des déformations ont lieu, suite aux retraits rattachés aux soudures de chaque bloc et à l'installation des renforts, montés à intervalles. Par conséquent, la déformation est répétitive, c'est-à-dire que la formation de creux et de bosses a lieu de façon relativement séquentielle.

D'autre part, comme on le sait, il faut reconstituer une certaine planéité, aussi bien pour des raisons esthétiques que pour pouvoir réaliser l'armement du navire, c'est-à-dire pour permettre la mise en place des éléments constructifs tels que les panneaux diviseurs des cabines, l'agencement et similaires.

Selon la technique connue, pour éliminer lesdits inconvénients, la planéité est reconstituée au moyen d'agglomérants à base cimentaire ou bien, pour les ponts extérieurs, à base de résines, en utilisant en tant qu'additif du sable de différentes granulométries et du latex de caoutchouc.

Un des inconvénients des agglomérants connus est dû au fait qu'il est assez difficile de les étaler, étant donné qu'ils ne sont pas fluides et que leur densité et leur consistance sont considérables.

Un inconvénient ultérieur des agglomérants connus est dû à la présence du sable qui, ayant une granulométrie considérable, allant de 1,3 mm. à 3 mm., ne permet pas d'étaler à zéro l'agglomérat.

Un autre inconvénient des matériaux utilisés, selon la technique connue, est dû au fait que lesdits matériaux ne sont pas à un seul composant et que, par conséquent, les inertes qu'ils contiennent entravent le pompage de l'agglomérat du quai jusqu'aux ponts, étant donné qu'ils peuvent provoquer des engorgements et, par conséquent, lesdits matériaux connus sont malaxés sur place, ce qui provoque un encombrement non souhaité à bord et salit les différents ponts où se déroulent ces travaux.

Le brevet US-A-5935699 décrit une composition légère, contenant des microsphères céramiques creuses, du ciment, des additifs et de l'eau. Cette composition peut être utilisée pour fabriquer des sols auto-nivelants à épaisseur zéro.

Tous les inconvénients mentionnés ont été éliminés en adoptant le matériau utilisé pour le ragréage naval, selon la présente invention.

Le but de la présente invention est de réaliser un ragréage avec un matériau à très faible densité, auto-nivelant, à un seul composant, et que l'on puisse appliquer à épaisseur zéro.

Une des caractéristiques que doit posséder le matériau à utiliser pour le ragréage est représentée par le fait que, tout en étant léger, il doit avoir une résistance appropriée afin de pouvoir supporter les charges considérables auxquelles il sera soumis pendant la longue période d'armement du navire, avant d'être recouvert par la couche de finition.

Le matériau à utiliser pour le ragréage doit également résister à l'eau, alors que les matériaux plus légers sont souvent moins imperméables. En effet, l'eau est toujours présente à bord des navires, en particulier pendant la période de l'armement.

Pour atteindre les buts préfixés, on a utilisé un matériau à un seul composant, pré-malaxé, avec une densité de 0,65 Kg/dm³, même inférieure jusqu'à 0,35 Kg/dm³, ayant une granulométrie non supérieure à 200 µ; grâce à l'absence de charges inertes de grandes dimensions, ce matériau peut être étalé même sur les creux jusqu'à une épaisseur qui tend à zéro.

Outre à atteindre tous les buts prévus, certains des nombreux avantages obtenus avec la présente invention sont les suivants.

Avec la présente invention, grâce au fait que le matériau peut être étalé uniquement sur les creux, il est possible de réduire au minimum l'épaisseur du matériau rapporté. En effet, il est possible d'appliquer ledit matériau "par taches", c'est-à-dire uniquement en correspondance des zones du pont où on le considère opportun. Par conséquent, on obtient une réduction des coûts et du poids, toujours très importante à bord des navires.

Le matériau selon la présente invention, par le fait qu'il est à un seul composant, peut être pompé depuis le quai directement sur les ponts, sans risque d'engorgements, ce qui en simplifie l'emploi et réduit les frais généraux.

Le matériau selon la présente invention est auto-nivelant, étant donné qu'il est à très faible densité.

Selon la présente invention, le matériau utilisé est constitué par les composants suivants: ciments pouzzolaniques, ciments aluminates, résines acryliques élastomères en poudre, plâtre, fluidifiants et super-fluidifiants, accélérants ou retardants et inertes ayant un diamètre non supérieur à 200 µ, formés par des charges sphéroïdales vitreuses creuses, quartz et résidus de fusion de l'aluminium.

Selon une réalisation préférée de cette invention, le matériau utilisé est constitué par les produits suivants avec les pourcentages indiqués ci-après, devant être considérés en tant que volume: ciments pouzzolaniques (Portland 425) dans la mesure de 10%, ciments aluminates dans la mesure de 10%, résines acryliques élastomères en poudre dans la mesure de 5%, plâtre dans la mesure de 10%.

La part restante, c'est-à-dire dans la mesure de 65%, est formée par des charges vitreuses creuses sphéroïdales 30%, des charges sphéroïdales (quartz) 10%, des charges sphéroïdales de résidus de la fusion de l'aluminium, fluidifiants et super-fluidifiants, accélérants ou retardants.

## Revendications

1. Ragréage naval, **caractérisé par le fait qu'**il est auto-nivelant, à un seul composant, applicable à épaisseur zéro, à très faible densité, qu'il est pré-malaxé avec densité allant de 0,65 Kg/dm³ jusqu'à 0,35 Kg/dm³ et qu'il est constitué par des ciments pouzzolaniques, ciments aluminates, résines acryliques élastomères en poudre, du plâtre, des fluidifiants et super-fluidifiants, accélérants ou retardants et des inertes ayant un diamètre non supérieur à 200 µ, formés par des charges sphéroïdales vitreuses creuses, quartz et résidus de fusion de l'aluminium.

2. Ragréage naval, selon la revendication 1, **caractérisé par le fait qu'**il est constitué par des ciments pouzzolaniques (Portland 425) dans la mesure de 10% du poids, ciments aluminates dans la mesure de 10% du poids, résines acryliques élastomères en poudre dans la mesure de 5% du poids, plâtre dans la mesure de 10% du poids, charges vitreuses creuses sphéroïdales dans la mesure de 30% du poids, charges sphéroïdales (quartz) dans la mesure de 10% du poids, charges sphéroïdales des résidus de la fusion de l'aluminium, fluidifiants et super-fluidifiants, accélérants ou retardants.

## Patentansprüche

1. Marine Dünnbettschicht, **dadurch gekennzeichnet, dass** sie selbstnivellierend, einzelteilig, bei Nullstärke anwendbar und von äußerst geringer Dichte ist, dass sie mit einer Dichte von 0,65 Kg/dm³ bis 0,35 Kg/dm³ vorgemischt ist und aus Puzzolanzementen, Aluminatzementen, pulverförmigen Acryl-Elastomerharzen, Gyps, Verflüssigern und Superverflüssigern, Beschleunigern oder Verzögerern und Zuschlagstoffen mit einem Durchmesser von nicht über 200 µ besteht, die aus hohlen sphärischen Glasfüllstoffen, Quarzgläsern und Aluminiumschmelzrückständen beschaffen sind.

2. Marine Dünnbettschicht nach Anspruch 1, **dadurch gekennzeichnet, dass** sie aus folgendem besteht: Puzzolanzementen (Portland 425) in Höhe von 10 Gewichtsprozent, Aluminatzementen in Höhe von 10 Gewichtsprozent, pulverförmigen Acryl-Elastomerharzen in Höhe von 5 Gewichtsprozent, Gyps in Höhe von 10 Gewichtsprozent, hohlen sphärischen Glasfüllstoffen in Höhe von 30 Gewichtsprozent, sphärischen Füllstoffen (Quarzen) in Höhe von 10 Gewichtsprozent, sphärischen Füllstoffen aus Aluminiumschmelzrückständen, Verflüssigern und Superverflüssigern, Beschleunigern und Verzögerern.

## Claims

1. Naval coating **characterized by** the fact that it is a self-levelling, single-component, and very low density product applicable with zero thickness and that it is pre-mixed to a density ranging from 0.65 Kg/dm³ to 0.35 Kg/dm³, and that it consists of pozzolan cement, alumina cement, acrylic elastomer resin powder, plaster, fluidifiers and superfluidifiers, accelerators or retarders, as well as aggregates with a diameter no greater than 200 µ, consisting of hollow vitreous spheroid fillers, quartz, and aluminium casting waste.

2. Naval coating according to claim 1, **characterized by** the fact that it consists of pozzolan cement (Portland 425) in weight proportion of 10%, alumina cement in weight proportion of 10%, acrylic elastomer resin powder in weight proportion of 5%, plaster in weight proportion of 10%, hollow vitreous spheroid fillers in weight proportion of 30%, spheroid (quartz) fillers in weight proportion of 10%, spheroid fillers from aluminium slag, fluidifiers and superfluidifiers, accelerators or retarders.
